Europäisches Patentamt

European Patent Office

Office européen des brevets

(11) Publication number: **0 401 141**
**A1**

## EUROPEAN PATENT APPLICATION

(21) Application number: 90440037.1

(51) Int. Cl.5: **H01B 1/20, H01B 1/06**

(22) Date of filing: 30.04.90

(30) Priority: **01.05.89 US 345368**

(43) Date of publication of application:
**05.12.90 Bulletin 90/49**

(84) Designated Contracting States:
**AT BE CH DE DK ES FR GB GR IT LI LU NL SE**

(71) Applicant: **THE MEARL CORPORATION**
**217 North Highland Avenue**
**Ossining New York(US)**

(72) Inventor: **Swallow, Brian R.**
**1606 Eagle Bay Drive**
**Ossining, New York(US)**

(74) Representative: **Arbousse-Bastide,**
**Jean-Claude Philippe et al**
**CABINET ARBOUSSE BASTIDE 20, rue de**
**Copenhague**
**F-67000 Strasbourg(FR)**

(54) **Titanium nitride-coated particles and conductive compositions comprising such titanium nitride coated particles.**

(57) Substrate particles are made conductive by a coating of titanium nitride.

The coated particles are used to impart conductivity to polymeric or plastic coatings and articles in which they are incorporated.

## TITANIUM NITRIDE-COATED PARTICLES

This invention relates to conductive particles and conductive polymeric and plastic articles containing such particles.

There are numerous applications in which it is desirable to impart conductive properties to ordinarily non-conducting polymeric articles and coatings. Conductive plastics are used as housings for computers and business machines to shield electrical components against electromagnetic and radio-frequency interference. Similarly, conductive packaging materials are used for storing and shipping products containing integrated circuits to prevent damage by electrostatic discharges. Conductive polymeric bonding compositions are used as "solders". Conductive primers are used for electrodeposition of paints.

Various types of conductive particles are used in polymers. These include metal particles, such as gold, silver, nickel, aluminum and copper, and non-metallic particles such as carbon black, graphite, and stannic oxide. More complex conductive particles consist of conductive coatings on conducting particles, e.g. silver on copper, or on non-conducting particles, e.g. nickel on mica. Since conductivity in the eventual plastic composition depends on particle to particle contact of the incorporated conductive material, the desired pro perty is achieved at lower concentration of the conductive component when the latter is present as a coating on a substrate particle.

It is an object of the present invention to provide conductive particles in which titanium nitride is coated on a substrate particle. Another object of the invention is to provide conductive polymeric and plastic compositions which contain such particles.

A further object is to provide a method for coating the substrate particles. More particularly, the particles in a fluidized bed reactor are coated by the vapor phase reaction of a titanium halide with ammonia, hydrazine, or a combination of hydrogen and nitrogen.

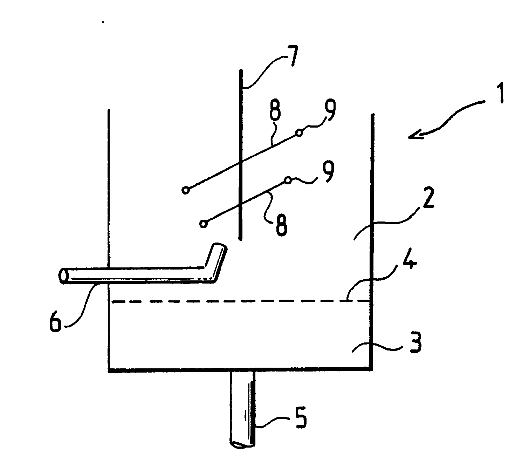

This and other features and advantages of the present invention will become apparent to those skilled in this art from the following description in which the sole figure shows a fluidizing bed reactor used in the invention.

Titanium nitride has a number of properties which make it especially useful for conductive coatings. It is highly conductive and is stable both at plastic processing temperatures and at ambient temperature ; it is insensitive to moisture and indeed is chemically inert except for slight reaction with concentrated acids. Furthermore, its low density (5.43 g./cm$^3$) compared to that of conductive metals which have heretofore been used for coatings (silver, 10.5 ; nickel, 8.9) is an advantage, since a given concentration by weight produces a thicker coating.

Suitable substrate materials include feldspars, ferric oxide, alumina, vermiculite, diatomite, wollastonite, barytes, micas such as muscovite, biotite, phlogopite, and synthetic micas, and the like. The particles should be small enough to pass through a 20-mesh sieve (0.84 mm) and should preferably pass a 40-mesh sieve (0.3 mm).

The invention may utilize combinations of substrate particles. Mixtures may be achieved by combining TiN coatings on different substrates or by coating a mixture of substrate mate rials.

For the coating operation, titanium nitride is produced in a vapor stage reaction in a fluidized bed reactor. A volatile titanium halide, preferably $TiCl_4$, is reacted with hydrogen and nitrogen at elevated temperature. The overall reaction for $TiCl_4$ is :

$$TiCl_4 \text{ (g)} + 2H_2 \text{ (g)} + \tfrac{1}{2} N_2(g) \rightarrow TiN(s) + 4 HCl \text{ (g)}$$

Where the reactants are titanium halide and ammonia, the reaction, for $TiCl_4$, may be written :

$$TiCl_4 \text{ (g)} + 2NH_3 \text{ (g)} \rightarrow TiN(s) + 4 HCl \text{ (g)} + H_2 \text{ (g)} + \tfrac{1}{2} N_2 \text{ (g)}$$

As the titanium nitride forms, it costs the particles in the fluidized bed. The product is conductive when the TiN content is at least about 10 % by weight, and a content of 15 % or more is preferred.

An additional useful property of the TiN-coated particles is their golden color. When the substrate consists of platy particles, as in the case of the micas, the product has a golden metallic luster and is useful as a gold piment.

The fluidized bed reactor used in the present invention is shown in the sole Figure. The reactor 1 with an inside diameter of say 4 inches encloses a fluidized gas plenum zone 3 and a fluidized bed reaction zone 2 tall enough to accommodate for example a 15-inch high fluidized bed. Reaction zone 2 and plenum zone 3 are separated by a distributor 4 which is designed to maintain an active bed over, preferably, the entire area of reaction zone 2. Gas, e.g., ammonia or nitrogen and hydrogen, is fed to plenum zone 3 through a tube 5. Extending into the reaction zone is a nozzle 6 which is designed to introduce the gaseous titanium salt into the fluidized bed reaction zone 2. An agitator comprising a rotatable shaft 7 carrying a plurality of extending arms 8, angled from the perpendicular, was used. Each arm 8 carries laterally extending blades 9.

The substrate particles to be coated are introduced into the fluidized bed apparatus which is capable of being maintained at a fluidized bed temperature of about 700-1050°C, preferably about 800-950°C. A fluidized gas which is inert, such as argon, or is one of the gases to be used in the coating procedure such as and preferably nitrogen, is introduced into the reactor in such a way that the particles are maintained as a substantially uniform fluidized bed throughout the reaction zone. The fluidizing gas velocity is independent of reactor size and the appropriate value can easily be determined. Preferably, the fluidizing gas is permitted to flow through the particles for a period of time (e.g. 0.1-2 hours) before the reactants are introduced in order to remove any removable bound or adsorbed water from the substrate. This period may be reduced, in the case of substrates containing bound water, such as natural diatomite and muscovite, by dehydrating them at appropriate temperatures prior to the coating process.

Vapors of the titanium chloride, either neat or diluted with a carrier gas, are introduced into the fluidized bed through a nozzle which preferably extends into the fluidized bed reaction zone. The coreactant(s), such as gaseous ammonia or a mixture of nitrogen and hydrogen, are also introduced into the fluidized gas reaction zone. The process is illustrated by the following Examples.

Example 1.

Muscovite mica (340 grams) having a longest dimension of about 5-150 μm were loaded into reaction chamber 2 of fluidized bed reactor 1. Nitrogen was introduced through sparger tube 5, plenum 3 and mesh plate distributor 4 into reaction zone 2 in order to fluidize the mica while the temperature was raised to about 850°C. This temperature was maintained for one hour in order to remove residual freeable moisture from the mica. The nitrogen introduction rate was maintained at about 35-40 ft./min.

The apparatus included a rotatable shaft 7 carrying extending arms 8 angled from the perpendicular. Each arm 8 carried laterally extending blades.

Nitrogen was bubbled through titanium tetrachloride in a saturator (not shown) and then supplied to the fluidized bed reactor 1.

Reaction zone 2 was then supplied with the titanium tetrachloride at the rate of 0.1 lb./hr. by means of a nitrogen stream saturated with titanium tetrachloride introduced through nozzle 6. Hydrogen was introduced into the fluidizing nitrogen gas which was being introduced through tube 5 in an amount designed to establish a fluidized bed reaction chamber 2 gas composition of about 0.4 % titanium tetrachloride, 58.6 % hydrogen and 41.0 % nitrogen. The reaction was permitted to continue for 13 hours at which time the coated mica was recovered. The gold-colored product contained 24.3 % TiN.

The conductivity of the product was evaluated by incorporating the powder in a two-component polyurethane enamel (F63V1 clear with V66V27 catalyst, Sherwin-Williams Co.) and applying as a coating to an ABS panel with a Bird wet film applicator. After curing, the dry film consisted of 56 % pigment and 44 % binder (by weight) and was 0.0055 inch (140μm) thick. A film containing the uncoated mica substrate was similarly prepared. The surface resistivity was measured in each case by attaching two flat rectangular aluminum electrodes 5.3 cm long to the polyurethane film. The electrodes were placed 5.3 cm apart so that resistivity was measured across a square of 5.3 cm on each side.

Surface resistivity of the film containing uncoated mica was infinite. The resistivity of the film made with the TiN-coated mica was 4.5 ohms/square, demonstrating the conductivity of the film.

Example 2.

The apparatus of Example 1 was charged with 350 g. dehydrated muscovite. The bed was fluidized with nitrogen at 25 ft./min., heated to 850°C, and held for 1 hour to drive off any re-adsorbed moisture.

Reaction zone 2 was then supplied with the titanium tetrachloride at the rate of 0.1 lb./hr. by means of a nitrogen stream saturated with titanium tetrachloride introduced through nozzle 6. $NH_3$ was introduced into the fluidizing nitrogen gas which was being introduced through tube 5 in an amount designed to establish a fluid bed reaction chamber 2 gas composition of about 0.6 % titanium tetrachloride, 49.7 % $NH_3$, and 49.7 % $N_2$. The reaction was permitted to continue for 17 hours at which time the coated mica was recovered. The gold colored product contained 37.1 % TiN.

The conductivity of the powder was determined by packing the powder into a cavity 1 cm in diameter, and 1 cm deep at a pressure of 1400 lb./in². Current was provided through two aluminum electrodes 1 cm in diameter placed 1 cm apart. The conductivity was 37 (ohm-cm)$^{-1}$ The uncoated substrate had a conductivity of zero.

## Example 3.

The procedure of Example 2 was followed except that the apparatus was charged with 2000 g. 140-mesh feldspar and ran for 20 hours. The product contained 12.0 % TiN and was conductive.

## Example 4.

A conductive polyester cylinder was prepared containing 50 % by weight of the TiN-coated mica of Example 2. A suspension of the following composition, all concentrations being by weight, was first made :

| | |
|---|---|
| TiN-coated mica of Example 2 | 50.00 % |
| Polyester resin (Koppers Co. B726-138F) | 36.72 |
| Styrene | 12.24 |
| Cobalt naphthenate, 6 % (Witco Chemical) | 0.06 |
| Lupersol DDM (Wallace & Tiernan, Inc.) | 0.98 |
| | 100.00 |

The polyester resin, styrene, and naphthenate were first mixed and then combined with the TiN-coated mica. The suspension was allowed to stand for a few minutes to let air bubbles escape. Lupersol DDM (methyl ethyl ketone peroxide in dimethyl phthalate) was then added. The catalyzed resin was immediately poured into a test tube, 13 mm inside diameter, to a height of 3 cm. The resin gelled in about 6 minutes. After the heat of the exotherm was dissipated, the polyester rod was removed from the tube and cured in an air oven at 50°C for 0.5 hour. A cylinder 1 cm high was cut from the tube and the flat faces were polished.

The flat ends of the cylinder were coated with nickel paint, and the cylinder was placed between cylindrical aluminum electrodes 1 cm in diameter. The conductivity was 3.5 (ohm-cm)$^{-1}$.

A control cast, treated identically except for the omission of the TiN-coated mica, had a conductivity of zero.

Various changes and modifications can be made in the products and process of this invention without departing from the spirit and scope thereof. The various embodiments set forth therein were intended for illustration purposes only.

**Claims**

1. A composition made of conductive particles, characterised in that it comprises substrate particles coated with titanium nitride.

2. The composition of claim 1, in which the substrate particles are inorganic.

3. The composition of claim 2, in which the substrate is mica.

4. The composition of anyone of the preceding claims, in which titanium nitride is at least 10 % by weight thereof.

5. A coating conductive composition, characterised in that it comprises, in a film-forming polymeric vehicle, the titanium nitride-coated substrate particles according to anyone of the preceding claims.

6. An article characterised in that it comprises, in a plastic matrix, the titanium nitride-coated substrate particles according to anyone of claims 1 to 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE DERWENT WORLD PATENT INDEX, AN=86-045696, Derwent Publications Ltd, London, GB; & JP-A-60 264 313 (TEIKOKU KAKO K.K.) * Abstract * ----- | 1-6 | H 01 B 1/20<br>H 01 B 1/06 |
| | | | **TECHNICAL FIELDS SEARCHED (Int. Cl.5)**<br><br>H 01 B 1<br>C 09 D 5 |

The present search report has been drawn up for all claims

| Place of search | Date of completion of the search | Examiner |
|---|---|---|
| THE HAGUE | 13-09-1990 | DROUOT M.C. |

EPO FORM 1503 03.82 (P0401)